(19) **Europäisches Patentamt / European Patent Office / Office européen des brevets**

(11) **EP 1 608 960 B1**

(12) **FASCICULE DE BREVET EUROPEEN**

(45) Date de publication et mention
de la délivrance du brevet:
**21.05.2008 Bulletin 2008/21**

(21) Numéro de dépôt: **04742364.5**

(22) Date de dépôt: **25.03.2004**

(51) Int Cl.:
*G01N 29/34* (2006.01)   *G01N 29/12* (2006.01)

(86) Numéro de dépôt international:
**PCT/FR2004/000760**

(87) Numéro de publication internationale:
**WO 2004/088758 (14.10.2004 Gazette 2004/42)**

(54) **PROCEDE ET DISPOSITIF DE MESURE ACOUSTIQUE DE CARACTERISTIQUE PHYSIQUE DE MATERIAUX POROELASTIQUE**

VERFAHREN UND EINRICHTUNG ZUR AKUSTISCHEN MESSUNG PHYSISCHER EIGENSCHAFTEN PORÖSER ELASTISCHER MATERIALIEN

METHOD AND DEVICE FOR ACOUSTIC MEASUREMENT OF PHYSICAL CHARACTERISTICS OF POROUS ELASTIC MATERIALS

(84) Etats contractants désignés:
**AT BE BG CH CY CZ DE DK EE ES FI FR GB GR HU IE IT LI LU MC NL PL PT RO SE SI SK TR**

(30) Priorité: **28.03.2003 FR 0303913**

(43) Date de publication de la demande:
**28.12.2005 Bulletin 2005/52**

(73) Titulaires:
- **CENTRE NATIONAL DE LA RECHERCHE SCIENTIFIQUE (CNRS)**
  **75794 Paris Cedex 16 (FR)**
- **Université du Maine**
  **72085 Le Mans Cédex (FR)**

(72) Inventeurs:
- **CASTAGNEDE, Bernard**
  **F-72000 Le Mans (FR)**
- **TOURNAT, Vincent**
  **F-72000 Le Mans (FR)**
- **MOUSSATOV, Alexei**
  **F-72000 Le Mans (FR)**
- **GOUSSEV, Vitali**
  **F-72000 Le Mans (FR)**

(74) Mandataire: **Texier, Christian et al**
**Cabinet Régimbeau**
**20, rue de Chazelles**
**75847 Paris cedex 17 (FR)**

(56) Documents cités:
**DE-A- 10 027 827         US-A- 5 921 928**
**US-B1- 6 186 004         US-B1- 6 415 666**

- **KREUGER J ET AL: "DETERMINATION OF ACOUSTIC ABSORBER PARAMETERS IN IMPEDANCE TUBES" APPLIED ACOUSTICS, ELSEVIER PUBLISHING, GB, vol. 50, no. 1, 1997, pages 79-89, XP001064924 ISSN: 0003-682X**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention est relative aux procédés et dispositifs de mesure acoustique de caractéristiques physiques de matériaux poroélastiques.

Plus particulièrement, l'invention concerne un procédé de mesure acoustique pour déterminer au moins une caractéristique physique d'un matériau poroélastique, ce procédé comportant les étapes suivantes :

(a) on émet vers le matériau poroélastique une onde acoustique générée par effet paramétrique ultrasonore,

(b) on capte au moins des premier et deuxième signaux représentatifs de l'onde acoustique, avec au moins un capteur acoustique,

(c) et on détermine ladite caractéristique physique à partir des premier et deuxième signaux.

Le document JP-A-63218855 décrit un exemple d'un tel procédé, qui présente l'inconvénient d'être particulièrement complexe, long et délicat à mettre en oeuvre et qui ne permet qu'un nombre très limité de types de mesures. Le document US-A-6186004 décrit un autre example d'un tel procédé.

La présente invention a notamment pour but de pallier ces inconvénients.

A cet effet, selon l'invention, un procédé du genre en question est caractérisé en ce qu' au cours de l'étape (a), on génère l'onde acoustique en produisant une onde ultrasonore modulée en amplitude, avec une fréquence de modulation centrale $f_m$ comprise entre 0,1 et 50 kHz, et l'onde acoustique émise présente une durée comprise entre $1/f_m$ et $100/f_m$,

et en ce que l'étape (b) comprend les sous-étapes suivantes :

(b1) on capte ledit premier signal avant interaction de l'onde acoustique avec le matériau poroélastique, au moyen du capteur acoustique,

(b2) on capte ledit deuxième signal après interaction de l'onde acoustique avec le matériau poroélastique (rétrodiffusion ou transmission) au moyen du même capteur acoustique que celui utilisé à la sous-étape (b1).

Grâce à ces dispositions, la mise en oeuvre du procédé selon l'invention est particulièrement simple.

En particulier, du fait que l'onde acoustique est impulsionnelle :

- on peut utiliser un seul microphone, au lieu de deux dans le document susmentionné, notamment du fait que l'onde impulsionnelle permet une discrimination très précise en amplitude et/ou en phase (en particulier, on peut facilement faire la discrimination entre l'onde incidente et l'onde réfléchie lorsqu'on travaille en réflexion), ce qui évite une calibration du signal capté (obligatoire lorsqu'on utilise plusieurs microphones) et simplifie le traitement dudit signal capté,
- la mesure, qui est grandement facilitée par rapport aux mesures ultrasonores conventionnelles, est très rapide, ce qui autorise des mesures en temps réel, des mesures hors d'un laboratoire, par exemple dans un bâtiment, un véhicule ou autre, pour mesurer in situ des paramètres physiques de matériaux insonorisants, ou encore dans un processus de fabrication industrielle pour effectuer des contrôles de qualité, notamment directement sur une chaîne de production de matériau poroélastique,
- il est possible de travailler en milieu non anéchoïque, ce qui contribue à faciliter grandement la mise en oeuvre de la présente invention, aussi bien en laboratoire qu'hors du laboratoire.

De plus, le procédé selon l'invention s'est avéré particulièrement précis et robuste, capable de faire des mesures à distance et facile à mettre en oeuvre sans requérir d'expertise particulière de la part de l'utilisateur.

Enfin, le procédé selon l'invention peut éventuellement être mis en oeuvre par un appareil portable, ce qui en facilite encore l'utilisation.

Dans divers modes de réalisation du système de détection selon l'invention, on peut éventuellement avoir recours en outre à l'une et/ou à l'autre des dispositions suivantes :

- au cours de l'étape (a), on génère l'onde acoustique en produisant une onde ultrasonore modulée en amplitude, avec une fréquence de modulation centrale $f_m$ comprise entre 0,5 et 32 kHz, et l'onde acoustique émise présente une durée comprise entre $1/f_m$ et $20/f_m$ ;
- au cours de l'étape (a), on produit l'onde ultrasonore modulée en amplitude en utilisant au moins un transducteur qui reçoit un signal électrique modulé en amplitude ;
- au cours de l'étape (a), on produit l'onde ultrasonore modulée en amplitude en utilisant au moins deux transducteurs qui émettent respectivement deux ondes ultrasonores non modulées en amplitude, lesdites ondes ultrasonores non modulées en amplitude présentant des fréquences centrales qui diffèrent d'une valeur comprise entre 0,1 et 50 kHz ;

- au cours de l'étape (a), on produit l'onde ultrasonore modulée en amplitude en utilisant au moins deux transducteurs qui émettent respectivement deux ondes ultrasonores non modulées en amplitude, lesdites ondes ultrasonores non modulées en amplitude présentant des fréquences centrales qui diffèrent d'une valeur comprise entre 0,5 et 32 kHz ;
- au cours de l'étape (a), l'onde acoustique émise présente une durée comprise entre $1/f_m$ et $12/f_m$ ;
- ladite caractéristique physique déterminée au cours de l'étape (c) est choisie parmi le coefficient de réflexion, la porosité, la résistivité, le coefficient d'absorption, l'impédance acoustique, le coefficient de transmission, le coefficient d'atténuation, la vitesse de phase, la courbe de dispersion, la longueur viscothermique, la tortuosité, la longueur caractéristique visqueuse et la longueur caractéristique thermique (cette liste n'est bien entendu pas limitative, et d'autres grandeurs peuvent éventuellement être mesurées par le procédé selon l'invention, telles que : résistance au passage de l'air, épaisseur d'un matériau, compressibilité d'un matériau, etc.) ;
- le deuxième signal est capté après rétrodiffusion de l'onde acoustique sur le matériau poroélastique ;
- le deuxième signal est capté après passage de l'onde acoustique au travers du matériau poroélastique ;
- on mesure ladite caractéristique physique dans un milieu où le matériau poroélastique est utilisé comme matériau insonorisant, ce milieu étant choisi parmi un bâtiment, un ouvrage d'art, un véhicule automobile, un aéronef, un véhicule ferroviaire et un navire ;
- on mesure ladite caractéristique physique dans une chaîne de fabrication du matériau poroélastique ;
- on interpose un matériau formant filtre acoustique passe-bas sur le trajet de l'onde acoustique, en amont du matériau poroélastique à étudier, les premier et deuxième signaux étant tous captés après passage de l'onde acoustique dans le matériau formant filtre acoustique ;
- on traite premier et deuxièmes signaux captés avec un filtre passe-bas ;
- on mesure une courbe de dispersion du matériau poroélastique sur une bande de fréquences comprises dans la plage 100 Hz-500 kHz, et on calcule une courbe du coefficient d'absorption à partir de la courbe de dispersion sur la même bande de fréquences ;
- on détermine ladite caractéristique physique du matériau poroélastique en fonction d'une position sur ce matériau ;
- à partir de ladite caractéristique physique, on détermine des fuites acoustiques dans le matériau poroélastique ;
- on capte les premier et deuxième signaux à une distance supérieure à 10 m du matériau poroélastique ;
- le matériau poroélastique sur lequel on effectue la mesure est en cours de fabrication (par exemple en sortie de chaîne de fabrication).

Par ailleurs, l'invention a également pour objet un dispositif de mesure acoustique pour déterminer au moins une caractéristique physique d'un matériau poroélastique, ce dispositif comprenant :

- des moyens d'émission acoustique pour émettre vers le matériau poroélastique au moins une onde acoustique ultrasonore générée par effet paramétrique,
- des moyens d'écoute pour capter au moins des premier et deuxième signaux représentatifs de l'onde acoustique,
- et des moyens de traitement pour déterminer ladite caractéristique physique à partir des premier et deuxième signaux,

caractérisé en ce que les moyens d'émission acoustique sont adaptés pour générer l'onde acoustique en produisant une onde ultrasonore modulée en amplitude, avec une fréquence de modulation centrale $f_m$ comprise entre 0,1 et 50 kHz, pendant une durée comprise entre $1/f_m$ et $100/f_m$,
en ce que les moyens d'écoute comprennent un unique capteur acoustique adapté pour capter ledit premier signal avant interaction de l'onde acoustique avec le matériau poroélastique puis ledit deuxième signal après interaction de l'onde acoustique avec le matériau poroélastique,
et en ce que les moyens de traitement sont adaptés pour déterminer ladite caractéristique physique à partir des signaux captés par ledit capteur acoustique.
Selon un mode de réalisation, les moyens d'émission acoustique sont adaptés pour générer l'onde acoustique en produisant une onde ultrasonore modulée en amplitude, avec une fréquence de modulation centrale $f_m$ comprise entre 0,5 et 32 kHz, pendant une durée comprise entre $1/f_m$ et $20/f_m$.
Eventuellement, le transducteur et le capteur acoustique peuvent être intégrés dans une même sonde de mesure portative.
D'autres caractéristiques et avantages de l'invention apparaîtront au cours de la description suivante de plusieurs de ses formes de réalisation, données à titre d'exemples non limitatifs, en regard des dessins joints.
Sur les dessins :

- la figure 1 est une vue schématique d'un dispositif selon une première forme de réalisation de l'invention, dans un premier mode de fonctionnement en rétrodiffusion sur un matériau poroélastique à étudier,
- les figures 2 et 3 illustrent respectivement les formes temporelle et spectrale d'un exemple de signal électrique susceptible d'être utilisé pour alimenter le transducteur ultrasonore du dispositif de la figure 1,

- la figure 4 représente la forme temporelle des signaux captés par le microphone du dispositif de la figure 1 lorsque le transducteur a émis une onde ultrasonore correspondant au signal électrique de la figure 2,
- les figures 5 et 6 sont des vues partielles du dispositif de la figure 1, respectivement dans des deuxième et troisième modes de fonctionnement en rétrodiffusion,
- la figure 7 est une vue partielle du dispositif de la figure 1, dans un mode de fonctionnement en transmission au travers d'un matériau poroélastique à étudier,
- les figures 8 et 9 montrent respectivement la forme temporelle et le spectre du signal capté par le microphone du dispositif de la figure 7, sans le matériau poroélastique, et sans filtrage électronique (signal brut propagé dans l'air),
- la figure 10 montre la forme temporelle du signal capté par le microphone du dispositif de la figure 7, en présence du matériau poroélastique,
- et la figure 11 est une vue partielle d'un dispositif selon une deuxième forme de réalisation de l'invention.

Sur les différentes figures, les mêmes références désignent des éléments identiques ou similaires.

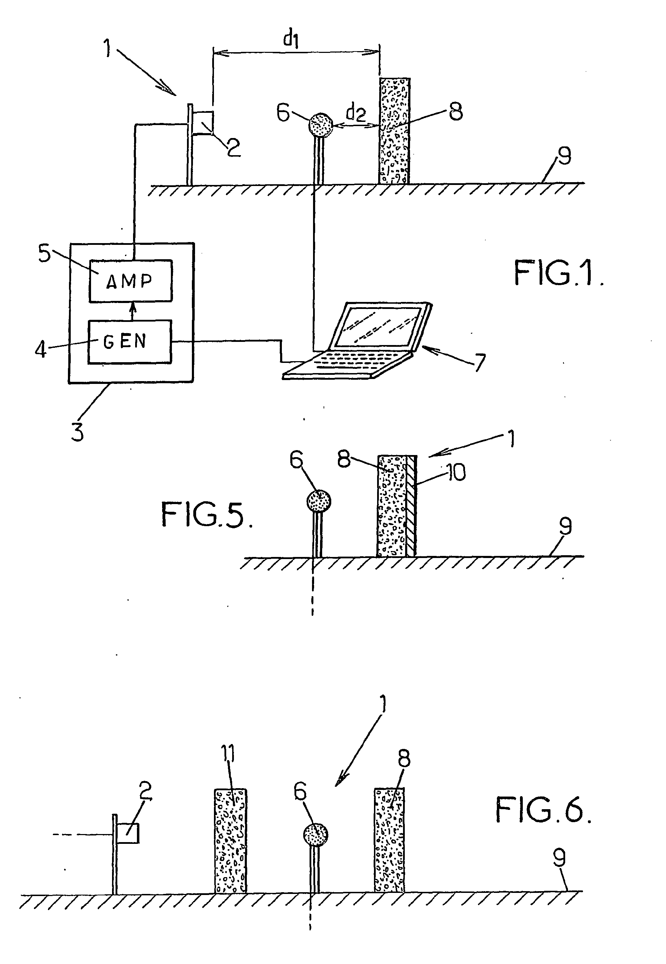

Comme représenté sur la figure 1, le dispositif de mesure 1 utilisé par la présente invention peut comprendre :

- un transducteur acoustique 2 comprenant au moins un élément émetteur ultrasonore capable de générer des ultrasons dans l'air, par exemple autour d'une fréquence centrale porteuse $f_p$ comprise entre 30 et 200 kHz, avantageusement de l'ordre de 160 kHz ; ce transducteur acoustique 2 peut émettre par exemple un faisceau d'ondes ultrasonores de profil gaussien et présenter par exemple un rayon équivalent d'environ 2 cm,
- un dispositif de commande 3 adapté pour commander le transducteur 2, ce dispositif de commande comprenant par exemple un générateur de signaux 4 (GEN - constitué par exemple par un ou deux boîtiers de marque «AGILENT 33120A») qui envoie des signaux vers un amplificateur 5 (AMP - par exemple, un amplificateur de puissance de type «BK2713»), lequel alimente le transducteur 2,
- un microphone 6 de préférence quasi-ponctuel qui peut notamment être un microphone à électret, ou un microphone de métrologie par exemple de marque «BRUEL & KJAËR» et d'ouverture 1/2 pouce (1,27 cm), ou tout autre capteur acoustique approprié,
- un micro-ordinateur 7 doté d'une carte son, ou tout autre dispositif électronique d'analyse tel qu'un oscilloscope ou autre, qui reçoit, enregistre et analyse les signaux captés par le microphone 6, ce micro-ordinateur 7 ou autre dispositif d'analyse pouvant éventuellement comprendre un filtre passe-bas en entrée pour augmenter la dynamique des signaux captés (ce filtre étant passant par exemple dans les fréquences sonores), et le micro-ordinateur 7 étant en outre relié de préférence au dispositif de commande 3 pour synchroniser les enregistrements de signaux reçus par le micro-ordinateur 7 avec les tirs d'ondes ultrasonores par le transducteur 2.

Avantageusement, les signaux provenant du microphone 6 peuvent passer d'abord dans un préamplificateur audio (par exemple de type "BK") puis dans un filtre analogique ou numérique passe-bande (par exemple de type "KROHN-HITE 3945" avant d'arriver au micro-ordinateur 7.

Le faisceau d'onde acoustique émis par le transducteur 2 est dirigé vers un échantillon 8 de matériau poroélastique à étudier, qui peut se présenter par exemple sous la forme d'une plaque sensiblement perpendiculaire audit faisceau. Le matériau en question est par exemple un matériau insonorisant tel qu'une mousse synthétique, des fibres ou des particules agglomérées, un feutre, ou similaires.

Le microphone 6 et l'échantillon 8 sont par exemple portés par un banc de mesure 9 de laboratoire (bien entendu, cet exemple n'est pas limitatif et l'invention n'est pas limitée aux mesures en laboratoire).

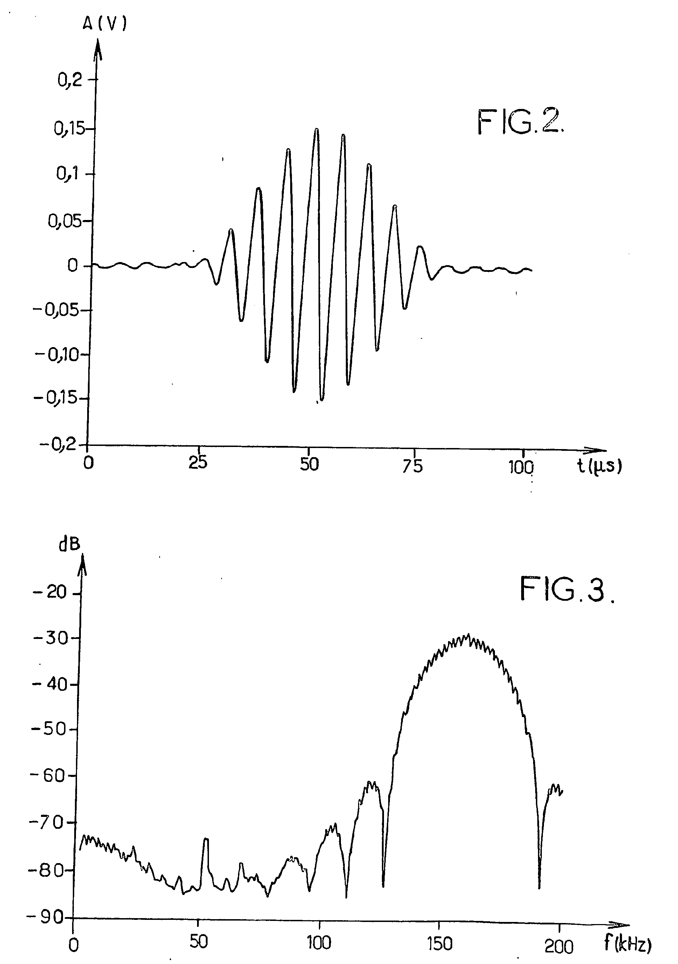

Lorsque l'utilisateur déclenche un tir d'onde acoustique (par exemple au moyen d'un bouton de commande [non représenté] intégré au dispositif de commande 3), le transducteur 2 reçoit du dispositif de commande 3 un signal électrique tel que par exemple celui dont la forme temporelle est représentée sur la figure 2 (amplitude A en volts en fonction du temps t) et dont le spectre est représenté sur la figure 3.

Ce signal électrique est obtenu par modulation en amplitude d'une onde porteuse sinusoïdale de fréquence ultrasonore $f_p$. Cette fréquence porteuse est comprise entre quelques dizaines et quelques centaines de kHz, et vaut par exemple environ 160 kHz (dans l'exemple représenté sur les figures 2 et 3, l'onde porteuse a une fréquence de 159 kHz).

La porteuse est modulée en amplitude par un signal de modulation présentant une fréquence de modulation centrale $f_m$ inférieure à la fréquence porteuse fp, de préférence dans le domaine des fréquences sonores ou largement au-dessus (par exemple, 0,5 à 32 kHz, voire 0,1 à 50 kHz, avantageusement environ 1 à 16 kHz ; dans l'exemple représenté sur les figures 2 et 3, l'onde de modulation a une fréquence de 16 kHz).

Dans l'exemple représenté sur la figure 2, le signal électrique fourni au transducteur 2 a une durée correspondant à une période $1/f_m$ de l'onde de modulation et comprend ainsi un paquet d'ondes unique, ce qui peut être avantageux notamment pour effectuer des mesures en réflexion.

De façon plus générale, la durée d'émission de l'onde acoustique peut correspondre à un nombre n de périodes

$1/f_m$ du signal de modulation, ce nombre n étant compris entre 1 et 20, voire entre 1 et 100, de préférence entre 1 et 15, avantageusement compris entre 1 et 12.

Le nombre n susmentionné de paquet d'ondes détermine la largeur spectrale de $\Delta f$ du signal basse fréquence (sonore) obtenu par effet paramétrique, qui est sensiblement égal à $f_m/n$ : cette largeur spectrale est donc maximale lorsque n = 1, comme dans l'exemple de la figure 2.

On notera par ailleurs que la modulation d'amplitude peut être de divers types, par exemple "Gaussienne", sinusoïdale, triangulaire, carrée ou autre, en fonction des besoins spécifiques des mesures métrologiques effectuées.

Le transducteur 2 émet une onde ultrasonore modulée qui, lors de sa propagation dans l'air, se démodule par effet paramétrique, c'est à dire par un processus d'auto démodulation non linéaire.

Cette démodulation a lieu principalement sur les premières dizaines de centimètres de propagation de l'onde acoustique dans l'air, en fonction de l'ouverture du transducteur ultrasonore et de sa fréquence porteuse, après quoi l'onde sonore démodulée se propage selon la direction initiale de l'onde ultrasonore. Cette onde sonore se propage sous la forme d'une onde quasi-plane, selon un faisceau très directif.

Afin que l'effet paramétrique se développe dans l'air, il est souhaitable que la distance d1 entre le transducteur 2 et le matériau 8 (voir figure 1) soit supérieure à quelques centimètres ou quelques dizaines de centimètres, cette distance d1 pouvant par ailleurs aller jusqu'à quelques mètres voire quelques dizaines de mètres.

Pour utiliser au mieux l'effet paramétrique, la distance d1 peut avantageusement être supérieure à $l_d$, où $l_d$ est la longueur de diffraction de l'onde ultrasonore émise par le transducteur 2, définie comme suit :

$$l_d = \pi . f_p . b^2 / c_0 ,$$

où b est le rayon équivalent du transducteur et $c_0$ la célérité des ondes acoustiques dans l'air ($c_0$=340 m/s).

Le procédé selon l'invention fonctionne néanmoins très bien pour des distances d1 inférieures à la valeur susmentionnée.

La distance d2 entre le microphone 6 et la face frontale du matériau poroélastique 8 est par ailleurs de préférence faible, mais supérieure à la distance parcourue dans l'air par l'onde sonore pendant la durée d'émission susmentionnée.

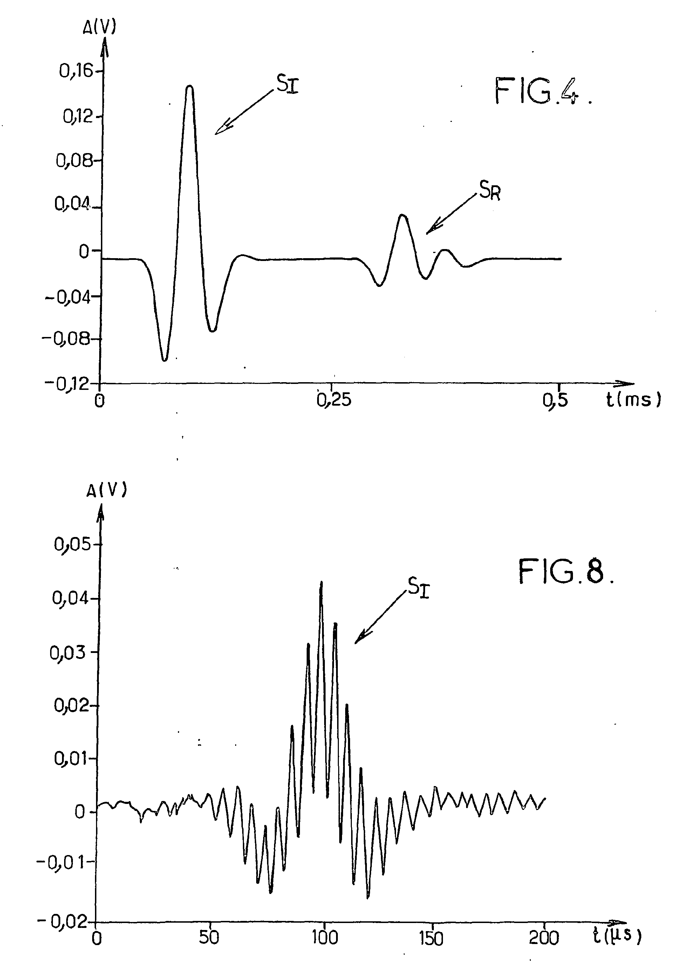

Lorsque le transducteur 2 émet une onde ultrasonore correspondant au signal électrique de la figure 2, le microphone 6 capte d'abord un premier signal $S_I$ correspondant à l'onde acoustique incidente, et constituant la partie gauche de la courbe de la figure 4. Puis le microphone 6 capte un deuxième signal $S_R$ constitué par la partie droite de la courbe de la figure 4, correspondant à l'onde acoustique rétrodiffusée par le matériau poroélastique 8.

Le coefficient de réflexion R du matériau poroélastique 8 peut être déduit desdits premier et deuxième signaux par le micro-ordinateur 7 :

$R(f)=(A2(f)/A1(f))^2$, où $A1(f)$ et $A2(f)$ sont respectivement les amplitudes spectrales correspondant aux signaux incident $S_I$ et réfléchi $S_R$ et f est la fréquence.

A partir du coefficient de réflexion R, le micro-ordinateur 7 peut déduire la porosité $\phi$ du matériau poroélastique, par exemple par la formule suivante, valable pour une fréquence suffisamment élevée (modèle asymptotique haute fréquence) par exemple supérieure à 15 kHz :

$$R = \frac{\sqrt{\alpha_\infty} - \phi}{\sqrt{\alpha_\infty} + \phi} \Rightarrow \phi = \sqrt{\alpha_\infty} \left( \frac{1 - R}{1 + R} \right) ,$$

où $\alpha_\infty$ est la tortuosité du matériau poroélastique, connue par ailleurs (connue à l'avance ou éventuellement déterminée comme expliqué ci-après par une mesure en transmission).

En fixant un fond rigide 10 sur la face de la plaque de matériau poroélastique 8 qui est orientée à l'opposé du transducteur 2 (voir figure 5), le micro-ordinateur 7 peut également calculer le coefficient d'absorption $\alpha_A$ du matériau poroélastique, par la formule :

$$\alpha_A = 1 - (A2/A1)^2 ,$$

$A1$ et $A2$ étant les amplitudes spectrales susmentionnées, mesurées dans la configuration de la figure 5.

En l'absence de fond 10, la détermination du coefficient d'absorption $\alpha_A$ requiert également une mesure en transmission, en déplaçant le microphone 6 derrière le matériau poroélastique 8 par rapport au transducteur 2, puis en déclenchant l'émission de la même onde acoustique que celle ayant servi à faire la mesure en rétrodiffusion telle que décrite ci-dessus. On mesure alors l'amplitude spectrale *A3(f)* du signal capté après transmission de l'onde sonore par le matériau 8, et le micro-ordinateur 7 peut par exemple calculer alors $\alpha_A$ par la formule suivante valable dans le cadre du modèle asymptotique haute fréquence susmentionné, c'est-à-dire par exemple pour $f_m > 15$ kHz :

$$\alpha_A = 1 - (\frac{A2}{A1})^2 - \frac{\Phi}{\sqrt{\alpha_\infty}}(\frac{A3}{A1})^2 \ .$$

On notera par ailleurs que, comme représenté sur la figure 6, dans tous les modes de fonctionnement du dispositif selon l'invention (fonctionnement en rétrodiffusion comme en transmission), il peut être avantageux d'interposer un filtre acoustique passe-bas 11 entre le transducteur 2 et le matériau poroélastique 8 à étudier, le filtre acoustique 11 étant placé par exemple à quelques dizaines de centimètres du transducteur 2 et disposé perpendiculairement au faisceau d'onde acoustique émis par le transducteur. Le filtre acoustique 11 peut être constitué par tout matériau poro-élastique (notamment mousse synthétique, panneau de particules ou de fibres agglomérées, feutre, etc.).

Dans ce cas, lorsqu'on travaille en rétrodiffusion comme représenté sur la figure 6, le microphone 6 est disposé entre le filtre acoustique 11 et le matériau 8 à étudier.

On notera que le filtre acoustique 11 pourrait constituer par exemple un manchon à extrémité fermée, entourant le transducteur 2 vers l'avant.

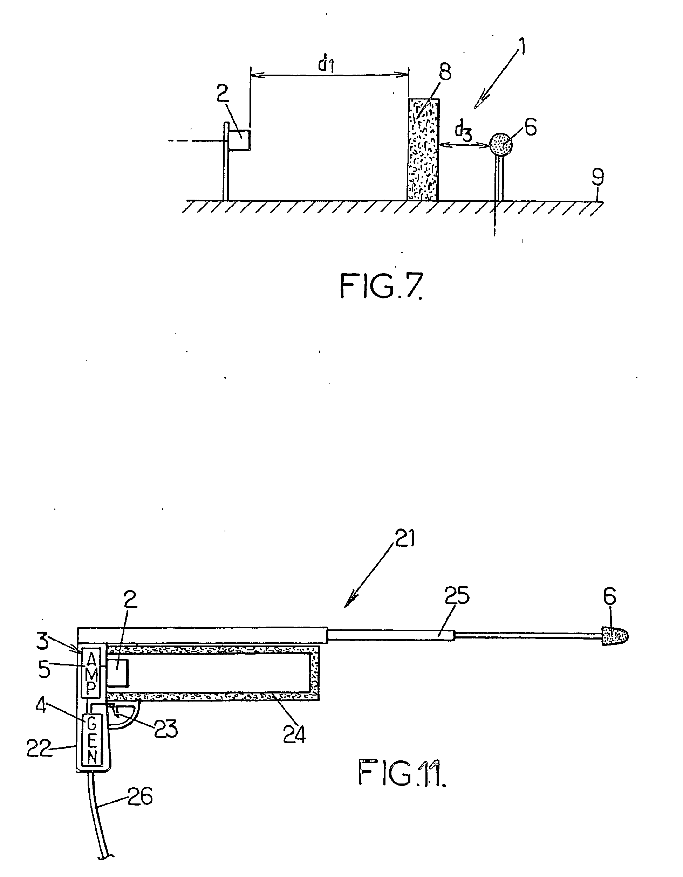

Par ailleurs, comme représenté sur la figure 7 et comme déjà mentionné ci-dessus, le dispositif selon l'invention peut être utilisé également pour faire des mesures en transmission. Dans ce cas, le microphone 6 est disposé derrière le matériau poroélastique à étudier 8 par rapport à la direction de propagation de l'onde acoustique, à une distance d3 la plus courte possible de la face arrière de ce matériau 8. Dans ce mode de fonctionnement, il est nécessaire de faire émettre deux fois la même onde acoustique impulsionnelle par le transducteur 2 :

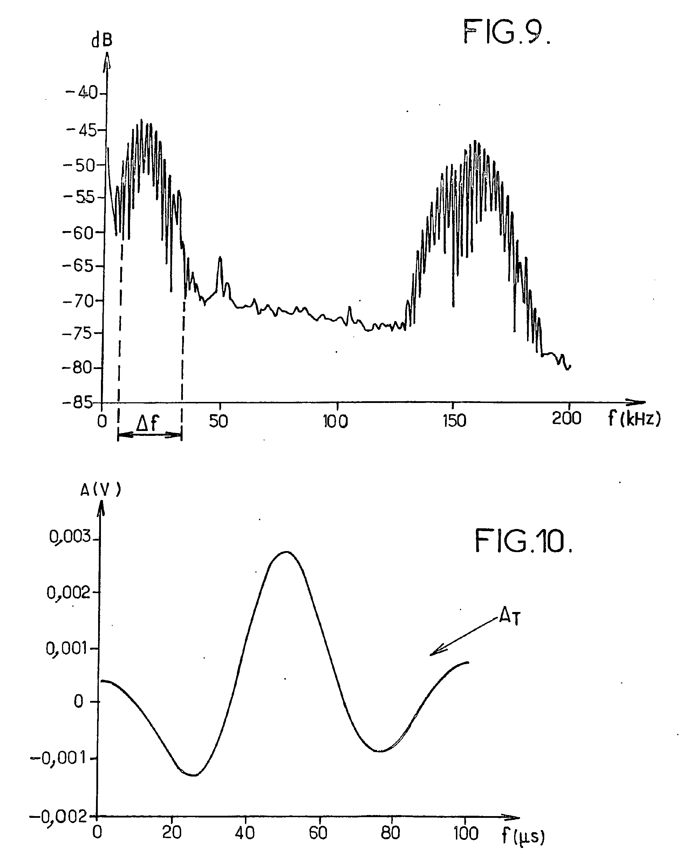

- une première fois en enlevant le matériau poroélastique 8, de façon à capter un premier signal $S_I$ au moyen du microphone 6 (voir figures 8 et 9),
- et une deuxième fois avec le matériau poroélastique 8, de façon à capter un deuxième signal $S_T$ au moyen du microphone 6 (voir figure 10), ce deuxième signal correspondant à l'onde acoustique transmise au travers du matériau poroélastique 8.

On notera que dans ce mode de fonctionnement, il est également possible d'utiliser le filtre acoustique 11 décrit en regard de la figure 6, positionné comme sur la figure 6. Dans ce cas, le filtre acoustique 11 est bien entendu laissé en place même lors de la mesure effectuée en l'absence du matériau à étudier 8.

Ce mode de fonctionnement en transmission permet au micro-ordinateur 7 de déterminer notamment le coefficient de transmission *T* de la plaque de matériau poroélastique 8 :

$$T(f) = (A3(f)/A1(f))^2.$$

Le micro-ordinateur 7 peut en déduire le coefficient d'atténuation *a=ln(T)/L*, où *ln* est la fonction logarithme et *L* est l'épaisseur du matériau poroélastique dans la direction de propagation de l'onde acoustique.

Le micro-ordinateur 7 effectue un traitement par déroulement de la phase du signal, lorsque ce signal est temporairement bref (et notamment lorsque n = 1) : à ce sujet, voir l'article de W. Sachse, Y. Pao, « On the determination of phase and group velocities of dispersive waves in solids », J. Appl. Phys., 49, 4320-4327 (1978). Ce traitement donne accès à la vitesse de phase c(f) de l'onde acoustique dans le matériau poroélastique 8 sur la bande spectrale Δf contenue dans le signal transmis, en mesurant le retard de phase Δt*(f)* introduit par le matériau poroélastique 8 à la fréquence f. Ce retard de phase, évalué à la fréquence centrale f du paquet d'ondes transmis, correspond environ, graphiquement, à la différence temporelle entre les positions des maxima de signaux avec et sans matériaux poroélastiques. Une fois mesuré le retard de phase Δt*(f)*, la vitesse de phase *c(f)* est calculée par le micro-ordinateur 7 par la formule :

$$c(f) = (\Delta t(f)/L + 1/c_0)^{-1},$$

où $c_0$ est la célérité du son dans l'air et *L* est l'épaisseur du matériau poroélastique 8.

Le micro-ordinateur 7 peut alors calculer le facteur de qualité Q par la formule :

$$Q = \frac{\pi f}{a c(f)} \; .$$

Par ailleurs, le micro-ordinateur 7 calcule l'épaisseur de couche limite visqueuse $\delta$ par la formule :

$$\delta = \sqrt{\frac{2\,\eta}{\rho_0 \omega}} \; ,$$

où $\eta$ est la viscosité de l'air et $\rho_0$ la densité de l'air au repos.

Le micro-ordinateur 7 calcule ensuite l'inverse $l_{vt}$ de la longueur viscothermique : $l_{vt}=1/(Q.\delta)$. Cette égalité est une approximation valable dès lors que la fréquence $f_s$ est assez élevée, en pratique, pour $f_s$=10 à 16 kHz (à ce sujet, voir l'article de P. Leclaire, L. Kelders, W. Lauriks, M. Melon, N.R. Brown, B. Castagnède, « Determination of the viscous and thermal characteristic lengths of plastic foams by ultrasonic measurements in air and in helium », J. Appl. Phys., 80, 2009-12 (1996)).

Le micro-ordinateur 7 calcule ensuite l'indice de réfraction acoustique $n(f)$ au carré, qui est fourni par la formule :

$$n^2(f) = (\frac{c_0}{c(f)})^2 = \alpha_\infty (1 + \delta l_{vt}) \; .$$

La valeur du coefficient de tortuosité $\alpha_\infty$ est déduite de l'égalité ci-dessus par le micro-ordinateur 7.

Le micro-ordinateur 7 peut alors également calculer les longueurs caractéristiques visqueuse et thermique $\Lambda$ et $\Lambda$' par la formule :

$$l_{vt} = \frac{1}{\Lambda} + (\gamma - 1)\frac{1}{B\Lambda'}$$

(où B est la racine carrée du nombre de Prandtl) en faisant l'approximation que $\Lambda$'=2.$\Lambda$ ou éventuellement $\Lambda$'=3.$\Lambda$, suivant le matériau poroélastique à étudier, ces relations étant vérifiées empiriquement dans la majeure partie des cas.

Le micro-ordinateur 7 peut alors également calculer l'impédance acoustique du matériau, par la formule:

$$Z_{mat} = \frac{k_0}{k_{mat}}(\frac{1+R}{1-R})Z_0\Phi \; ,$$ avec $Z_0 = \rho_0 c_0$, impédance acoustique de l'air, où $\Phi$ est la porosité du matériau et où $k_0$ et $k_{mat}$ sont les nombres d'onde dans l'air libre et dans le matériau.

Le micro-ordinateur 7 peut alors également calculer l'épaisseur h du matériau, par la formule: $h = \frac{c_{mat}}{2.\Delta t}$ ,

où $\Delta t$ représente le temps de parcours du paquet d'onde dans le matériau monté sur un réflecteur rigide parfait, et où $c_{mat}$ est la vitesse de propagation du son ou bien des ultrasons à la fréquence considérée f.

Le micro-ordinateur 7 peut également estimer la résistance au passage de l'air si nécessaire, lorsque tous les autres paramètres mentionnés sont déterminés, par la formule: $c_{mat}(f) = \sqrt{\dfrac{K(f)}{\rho(f)}}$ , où $K(f)$ et $\rho(f)$ représentent respectivement la compressibilité et la masse volumique du matériau insonorisant, avec par exemple

$$\rho(f) = \alpha_\infty \rho_0 / [1 + \frac{\sigma\Phi}{j.2\pi f \rho_0 \alpha_\infty}\sqrt{1 + \frac{4 j \alpha_\infty^2 \eta \rho_0 . 2\pi f}{\sigma^2 \Lambda^2 \Phi^2}}] \; ,$$ (une formule similaire est connue pour $K(f)$ : cf. D. Johnson, D. Koplik, R. Dashen, "Theory of dynamic permeability and tortuosity in fluid-saturated porous media", J. Fluid Mech., 176: 379-402 (1987)), ce qui permet au niveau du principe d'obtenir la résistance au passage de l'air σ lorsque tous les autres paramètres sont connus par ailleurs.

Dans les différents cas de figures envisagés ci-dessus, il serait possible d'utiliser d'autres méthodes pour déterminer les caractéristiques physiques souhaitées, par exemple en faisant appel à la méthode dite du déroulement de phase, mentionnée précédemment.

La méthode de déroulement de la phase mentionnée précédemment permet d'obtenir la courbe de dispersion c(f) sur la bande utile du signal transmis. Dans le cas d'une sonde paramétrique de basse fréquence (par exemple avec une onde porteuse ultrasonore située entre 40 et 50 kHz), il est possible d'utiliser une impulsion ultra brève de fréquence centrale très basse (typiquement comprise entre 400 Hz et 1600 Hz), couvrant la bande spectrale utile (à -6 dB) allant typiquement de 100 Hz à 4 kHz. La courbe de dispersion est ainsi enregistrée sur cette bande. Par extension, elle peut aussi avec d'autres réglages de la fréquence de modulation couvrir une bande fréquentielle plus élevée, et par recoupement permettre de couvrir la bande 100 Hz - 50 kHz, en prenant une autre sonde paramétrique avec une fréquence porteuse plus haute.

Il est alors possible d'utiliser les relations de Kramers-Krönig, H.A. Kramers "La diffusion de la lumière par les atomes", Atti del Congresso Internazionale dei Fisici, Como, (1927), R.D.L. Krönig, "On the theory of dispersion of X-rays", J. Opt. Soc. Amer., 12, 547-557 (1926), permettant de calculer la courbe d'absorption en fonction de la fréquence à partir de celle de dispersion de vitesse. Le formalisme de Kramers-Krönig, prend en compte la causalité pour un système propagatif linéaire, et les résultats en sont largement universels, s'appliquant très bien dans le cas des matériaux poroélastiques, Z.E.A. Fellah et al, "Verification of the Kramers-Kronig relationship in porous materials having a rigid frame", J. Sound & Vib., 270, 865-885 (2004). Une approximation intéressante est celle de O'Donnel qui permet d'écrire de façon explicite le passage de la vitesse de phase c(v) au coefficient d'absorption $\alpha(\upsilon)$ en fonction de la fréquence v, M. O'Donnel, E.T. Jaynes, J.G. Miller, "General relationships between ultrasonic attenuation and dispersion, J. Acous. Soc. Amer., 63, 1935-37 (1978). Une des relations possibles permettant de passer de c(f) à $\alpha$(f) est par exemple:

$$\alpha(v) = \frac{\pi^2 v^2}{C^2(v)} \frac{dC(v)}{dv}$$

Ainsi, sur le principe et en fonction des remarques précédentes, il est possible de mesurer la courbe d'atténuation à partir de celle de dispersion sur la bande 100 Hz - 4 kHz, voire au-delà, ce qui correspond exactement à la bande utile de beaucoup d'applications audio (automobile, aéronautique, bâtiment, etc.).

Par ailleurs, le dispositif de mesure acoustique selon l'invention peut aisément être rendu portable, de façon à pouvoir effectuer des mesures in situ, par exemple des mesures de caractéristiques physiques de matériau insonorisant effectuées dans le milieu où est utilisé ce matériau (bâtiments, ouvrages d'art, véhicules automobiles, aéronefs, véhicules ferroviaires, navires, etc.).

Ainsi, à titre d'exemple, comme représenté sur la figure 11, le transducteur 2, le microphone 6 ainsi que le cas échéant le dispositif de commande 3 peuvent être intégrés dans une sonde de mesure portative 21.

Cette sonde portative 21 peut comprendre :

- une poignée 22 ou autre organe de préhension adapté pour permettre à un utilisateur de portée d'orienter aisément la sonde 21,
- un organe de commande 23 tel qu'une gâchette ou similaire permettant à l'utilisateur de déclencher les tirs d'ondes ultrasonores, le transducteur 2,
- le cas échéant, un filtre acoustique passe-bas 24 constitué par exemple par un manchon de matériau poroélastique entourant le transducteur 2 vers l'avant et fermé vers l'avant (le filtre acoustique 24 a la même fonction que le filtre acoustique 11 décrit précédemment en regard de la figure 6),
- un support 25 tel qu'une perche télescopique ou autre, portant le microphone 6 et un câble 26 reliant le dispositif de commande 3 et le microphone 6 au microordinateur 7 ou à tout autre dispositif de traitement.

Le fonctionnement du dispositif de la figure 11 est le même que celui décrit précédemment en regard des figures 1 à 10.

On notera que :

- le dispositif selon l'invention, qu'il soit fixe ou portatif, peut être utilisé pour contrôler un processus de fabrication de matériau poroélastique (que ce matériau soit produit sous forme de pains de mousse, de matelas fibreux, d'agrégats de particules, ou bien incluant des écrans résistifs, des films isolants imperméables ou toute autre combinaison multicouche de ces éléments) ; dans ce cas, on mesure les caractéristiques physiques du matériau poroélastique au sein même de la chaîne de fabrication, de façon à pouvoir détecter en temps réel des dérives du processus de fabrication ;

- le dispositif selon l'invention peut être utilisé pour détecter des fuites acoustiques, des défauts de mise en oeuvre de matériaux poroélastiques, ou des détections d'hétérogénéité des matériaux poroélastiques, susceptibles de révéler par exemple des zones présentant des anomalies (à cet effet, on peut mesurer par exemple la déviation ou la variation d'au moins une caractéristique physique en fonction de l'endroit du matériau poroélastique, ce qui peut permettre notamment la détection de zones endommagées (déviations fortes) et/ou de fuites acoustiques dans des objets assemblés ou composés) ;

- et le dispositif selon l'invention peut être utilisé pour vérifier, par la mesure d'au moins une caractéristique physique, le bon fonctionnement acoustique d'objets assemblés ou composés, selon un processus comprenant par exemple des mesures avant et après mise en oeuvre du matériau poroélastique constituant au moins partiellement ces objets assemblés,

- le dispositif selon l'invention peut être utilisé pour mesurer un ou plusieurs paramètres du matériau poroélastique à distance, par exemple à une distance comprise entre 10 et 500 m.

Enfin, on notera que, pour générer l'onde acoustique sous la forme d'une onde ultrasonore modulée en amplitude, on peut le cas échéant utiliser deux transducteurs ultrasonores (non représentés) à la place du transducteur ultrasonore unique 2 susmentionné. Dans ce cas, les deux transducteurs ultrasonores émettent respectivement deux ondes ultrasonores non modulées en amplitude, ayant deux fréquences proches l'une de l'autre, la différence entre les fréquences centrales de ces deux transducteurs étant comprise entre 0,5 et 32 kHz, voire entre 0,1 et 50 kHz, ce qui produit un signal ultrasonore modulé équivalent à celui qui serait obtenu en commandant un transducteur unique au moyen d'un signal électrique modulé en amplitude tel que décrit précédemment.

On notera également que, dans le cas de matériau poro-élastique inhomogène, l'invention permet de mesurer un ou plusieurs des paramètres ci-dessus en fonction de la position sur une plaque de ce matériau, et de construire ainsi une cartographie bidimensionnelle précise de ce ou ces paramètres sur l'étendue du matériau testé.

Le ou les paramètres susmentionnés peuvent être mesurés sur tout matériau ou système insonorisant mis en forme, par exemple comprimé, recyclé, multicouche, éventuellement avec gradient de propriétés acoustiques, plan, courbe ou gauchi, de toutes dimensions, éventuellement constitué de fibres, de cellules, de grains ou de toutes combinaisons de ces possibilités.

Le cas échéant, le ou les paramètres en question peuvent être mesurés en utilisant des systèmes d'acquisition multi voies, comprenant un nombre n compris par exemple entre 1 et 256 microphones ou capteurs acoustiques permettant de travailler avec des techniques d'antennerie, de formation de voies, d'holographie acoustique, de rétropropagation, ou autre.

Par ailleurs, le ou les paramètres en question du matériau poroélastique peuvent être mesurés au cours du temps, sur des durées allant de quelques jours à quelques mois, voire à quelques années, pour suivre les variations au cours du temps des performances du matériau poroélastique, notamment lorsqu'il s'agit de matériau insonorisant.

**Revendications**

1.  Procédé de mesure acoustique pour déterminer au moins une caractéristique physique d'un matériau poroélastique (8), ce procédé comportant les étapes suivantes :

    (a) on émet vers le matériau poroélastique (8) une onde acoustique générée par effet paramétrique ultrasonore,
    (b) on capte au moins des premier et deuxième signaux ($S_I$, $S_R$ ; $S_I$, $S_T$) représentatifs de l'onde acoustique, avec au moins un capteur acoustique (6),
    (c) et on détermine ladite caractéristique physique à partir des premier et deuxième signaux,

    **caractérisé en ce qu'** au cours de l'étape (a), on génère l'onde acoustique en produisant une onde ultrasonore modulée en amplitude, avec une fréquence de modulation centrale $f_m$ comprise entre 0,1 et 50 kHz, pendant une durée comprise entre $1/f_m$ et $100/f_m$,
    et **en ce que** l'étape (b) comprend les sous-étapes suivantes :

    (b1) on capte ledit premier signal ($S_I$) avant interaction de l'onde acoustique avec le matériau poroélastique (8), au moyen du capteur acoustique (6),
    (b2) on capte ledit deuxième signal ($S_R$ ; $S_T$) après interaction de l'onde acoustique avec le matériau poroélastique (8), au moyen du même capteur acoustique (6) que celui utilisé à la sous-étape (b1).

**2.** Procédé selon la revendication 1, dans lequel au cours de l'étape (a), on génère l'onde acoustique en produisant une onde ultrasonore modulée en amplitude, avec une fréquence de modulation centrale $f_m$ comprise entre 0,5 et 32 kHz, pendant une durée comprise entre $1/f_m$ et $20/f_m$.

**3.** Procédé selon l'une quelconque des revendications 1 et 2, dans lequel au cours de l'étape (a), on produit l'onde ultrasonore modulée en amplitude en utilisant au moins un transducteur (2) qui reçoit un signal électrique modulé en amplitude.

**4.** Procédé selon la revendication 1, dans lequel, au cours de l'étape (a), on produit l'onde ultrasonore modulée en amplitude en utilisant au moins deux transducteurs (2) qui émettent respectivement deux ondes ultrasonores non modulées en amplitude, lesdites ondes ultrasonores non modulées en amplitude présentant respectivement des fréquences centrales qui diffèrent d'une valeur comprise entre 0,1 et 50 kHz.

**5.** Procédé selon la revendication 2, dans lequel au cours de l'étape (a), on produit l'onde ultrasonore modulée en amplitude en utilisant au moins deux transducteurs (2) qui émettent respectivement deux ondes ultrasonores non modulées en amplitude, lesdites ondes ultrasonores non modulées en amplitude présentant respectivement des fréquences centrales qui diffèrent d'une valeur comprise entre 0,5 et 32 kHz.

**6.** Procédé selon l'une quelconque des revendications précédentes, dans lequel l'onde acoustique émise présente une durée comprise entre $1/f_m$ et $12/f_m$.

**7.** Procédé selon l'une quelconque des revendications précédentes, dans lequel ladite caractéristique physique déterminée au cours de l'étape (c) est choisie parmi le coefficient de réflexion, la porosité, la résistivité, le coefficient d'absorption, l'impédance acoustique, le coefficient de transmission, le coefficient d'atténuation, la vitesse de phase, la courbe de dispersion, la longueur viscothermique, la tortuosité, la longueur caractéristique visqueuse et la longueur caractéristique thermique.

**8.** Procédé selon l'une quelconque des revendications précédentes, dans lequel le deuxième signal ($S_R$ ; $S_T$) est capté après rétrodiffusion de l'onde acoustique sur le matériau poroélastique (8).

**9.** Procédé selon l'une quelconque des revendications 1 à 7, dans lequel le deuxième signal ($S_R$ ; $S_T$) est capté après passage de l'onde acoustique au travers du matériau poroélastique (8).

**10.** Procédé selon l'une quelconque des revendications précédentes, dans lequel on mesure ladite caractéristique physique dans un milieu où le matériau poroélastique (8) est utilisé comme matériau insonorisant, ce milieu étant choisi parmi un bâtiment, un ouvrage d'art, un véhicule automobile, un aéronef, un véhicule ferroviaire et un navire.

**11.** Procédé selon l'une quelconque des revendications 1 à 9, dans lequel on mesure ladite caractéristique physique dans une chaîne de fabrication du matériau poroélastique (8).

**12.** Procédé selon l'une quelconque des revendications précédentes, dans lequel on interpose un matériau formant filtre acoustique passe-bas sur le trajet de l'onde acoustique (11, 24), en amont du matériau poroélastique (8) à étudier, les premier et deuxième signaux ($S_I$, $S_R$ ; $S_I$, $S_T$) étant tous captés après passage de l'onde acoustique dans le matériau formant filtre acoustique (11, 24).

**13.** Procédé selon l'une quelconque des revendications précédentes, dans lequel on traite les premier et deuxièmes signaux captés avec un filtre passe-bas.

**14.** Procédé selon l'une quelconque des revendications précédentes, dans lequel on mesure une courbe de dispersion du matériau poroélastique sur une bande de fréquences comprises dans la plage 100 Hz-500 kHz, et on calcule une courbe du coefficient d'absorption à partir de la courbe de dispersion sur la même bande de fréquences.

**15.** Procédé selon l'une quelconque des revendications précédentes, dans lequel on détermine ladite caractéristique physique du matériau poroélastique en fonction d'une position sur ce matériau.

**16.** Procédé selon l'une quelconque des revendications précédentes, dans lequel à partir de ladite caractéristique physique, on détermine des fuites acoustiques dans le matériau poroélastique.

**17.** Procédé selon l'une quelconque des revendications précédentes, dans lequel on capte les premier et deuxième signaux à une distance supérieure à 10 m du matériau poroélastique.

**18.** Procédé selon l'une quelconque des revendications précédentes, dans lequel le matériau poroélastique sur lequel on effectue la mesure est en cours de fabrication.

**19.** Dispositif de mesure acoustique pour déterminer au moins une caractéristique physique d'un matériau poroélastique (8), ce dispositif comprenant :

- des moyens d'émission acoustique (2, 3) pour émettre vers le matériau poroélastique (8) une onde acoustique générée par effet paramétrique ultrasonore,
- des moyens d'écoute (6) pour capter au moins des premier et deuxième signaux représentatifs de l'onde acoustique,
- et des moyens de traitement (7) pour déterminer ladite caractéristique physique à partir des premier et deuxième signaux,

**caractérisé en ce que** les moyens d'émission acoustique (2, 3) sont adaptés pour générer l'onde acoustique en produisant une onde ultrasonore modulée en amplitude, avec une fréquence de modulation centrale $f_m$ comprise entre 0,1 et 50 kHz, pendant une durée comprise entre $1/f_m$ et $100/f_m$,
**en ce que** les moyens d'écoute (6) comprennent un unique capteur acoustique (6) adapté pour capter ledit premier signal avant interaction de l'onde acoustique avec le matériau poroélastique (8) puis ledit deuxième signal après interaction de l'onde acoustique avec le matériau poroélastique,
et **en ce que** les moyens de traitement (7) sont adaptés pour déterminer ladite caractéristique physique à partir des signaux captés par ledit capteur acoustique (6).

**20.** Dispositif selon la revendication 19, dans lequel les moyens d'émission acoustique (2, 3) sont adaptés pour générer l'onde acoustique en produisant une onde ultrasonore modulée en amplitude, avec une fréquence de modulation centrale $f_m$ comprise entre 0,5 et 32 kHz, pendant une durée comprise entre $1/f_m$ et $20/f_m$.

**21.** Dispositif selon l'une quelconque des revendications 19 ou 20, dans lequel au moins le transducteur (2) et le capteur acoustique (6) sont intégrés dans une sonde de mesure portative (21).

**Claims**

**1.** An acoustic measurement method for determining at least one physical characteristic of a poroelastic material (8), this method including the following steps:

(a) an acoustic wave generated by an ultrasonic parametric effect is emitted towards the poroelastic material (8),
(b) at least first and second signals ($S_I$, $S_R$; $S_I$, $S_T$) representative of the acoustic wave, are sensed with at least one acoustic sensor (6),
(c) and said physical characteristic is determined from the first and second signals,

**characterized in that** during step (a) the acoustic wave is generated by producing an amplitude-modulated ultrasonic wave, with a central modulation frequency $f_m$ comprised between 0.1 and 50 kHz, for a duration comprised between $1/f_m$ and $100/f_m$,
and **in that** step (b) comprises the following substeps:

(b1) said first signal ($S_I$) is sensed before interaction of the acoustic wave with the poroelastic material (8), by means of the acoustic sensor (6),
(b2) said second signal (($S_R$; $S_T$) is sensed after interaction of the acoustic wave with the poroelastic material (8), by means of the same acoustic sensor (6) as the one used in substep (b1).

**2.** The method according to claim 1, wherein during step (a), the acoustic wave is generated by producing an amplitude-modulated ultrasonic wave, with a central modulation frequency $f_m$ comprised between 0.5 and 32 kHz, for a duration comprised between $1/f_m$ and $20/f_m$.

**3.** The method according to any of claims 1 and 2, wherein during step (a), the amplitude-modulated ultrasonic wave is produced by using at least one transducer (2) which receives an amplitude-modulated electric signal.

4. The method according to claim 1, wherein during step (a), the amplitude-modulated ultrasonic wave is produced by using at least two transducers (2) which emit two non-amplitude-modulated ultrasonic waves respectively, said non-amplitude-modulated ultrasonic waves having central frequencies respectively, which differ by a value comprised between 0.1 and 50 kHz.

5. The method according to claim 2, wherein during step (a), the amplitude-modulated ultrasonic wave is produced by using at least two transducers (2) which emit two non-amplitude-modulated ultrasonic waves respectively, said non-amplitude-modulated ultrasonic waves having central frequencies respectively, which differ by a value comprised between 0.5 and 32 kHz.

6. The method according to any of the preceding claims, wherein the emitted acoustic wave has a duration comprised between $1/f_m$ and $12/f_m$.

7. The method according to any of the preceding claims, wherein said physical characteristic determined during step (c) is selected from the reflection coefficient, the porosity, the resistivity, the absorption coefficient, the acoustic impedance, the transmission coefficient, the damping coefficient, the phase velocity, the dispersion curve, the viscothermal length, the tortuosity, the viscous characteristic length and the thermal characteristic length.

8. The method according to any of the preceding claims, wherein the second signal ($S_R$; $S_T$) is sensed after back-diffusion of the acoustic wave on the poroelastic material (8).

9. The method according to any of claims 1 to 7, wherein the second signal ($S_R$; $S_T$) is sensed after the acoustic wave has passed through the poroelastic material (8).

10. The method according to any of the preceding claims, wherein said physical characteristic is measured in a medium where the poroelastic material (8) is used as a sound-proof material, this medium being selected from a building, a structural work, a motor vehicle, an aircraft, a railway vehicle, and a ship.

11. The method according to any of claims 1 to 9, wherein said physical characteristic is measured in a line for manufacturing the poroelastic material (8).

12. The method according to any of the preceding claims, wherein a material forming a low-pass acoustic filter is interposed on the path of the acoustic wave (11, 24), upstream from the poroelastic material (8) to be investigated, the first and second signals ($S_I$, $S_R$; $S_I$, $S_T$) being all sensed after the acoustic wave has passed in the material forming an acoustic filter (11, 24).

13. The method according to any of the preceding claims, wherein the sensed first and second signals are processed with a low-pass filter.

14. The method according to any of the preceding claims, wherein a dispersion curve of the poroelastic material is measured over a band of frequencies comprised in the range from 100 Hz to 500 kHz, and an absorption coefficient curve is computed from the dispersion curve over the same band of frequencies.

15. The method according to any of the preceding claims, wherein said physical characteristic of the poroelastic material is determined depending on one position on this material.

16. The method according to any of the preceding claims, wherein acoustic leaks in the poroelastic material are determined from said physical characteristic.

17. The method according to any of the preceding claims, wherein the first and second signals are sensed at a distance larger than 10 m from the poroelastic material.

18. The method according to any of the preceding claims, wherein the poroelastic material on which the measurement is conducted, is being manufactured.

19. An acoustic measurement device for determining at least one physical characteristic of a poroelastic material (8), this device comprising:

- acoustic emission means (2, 3) for emitting towards the poroelastic material (8) an acoustic wave generated by an ultrasonic parametric effect,
- listening means (6) for sensing at least first and second signals representative of the acoustic wave,
- and processing means (7) for determining said physical characteristic from the first and second signals,

**characterized in that** the acoustic emission means (2, 3) are adapted in order to generate the acoustic wave by producing an amplitude-modulated ultrasonic wave, with a central modulation frequency $f_m$ comprised between 0.1 and 50 kHz, for a duration comprised $1/f_m$ and $100/f_m$, **in that** the listening means (6) comprise an single acoustic sensor (6) adapted for sensing said first signal before interaction of the acoustic wave with the poroelastic material (8) and then said second signal after interaction of the acoustic wave with the poroelastic material,
and **in that** the processing means (7) are adapted so as to determine said physical characteristic from the signals sensed by said acoustic sensor (6).

20. The device according to claim 19, wherein the acoustic emission means (2, 3) are adapted in order to generate the acoustic wave by producing an amplitude-modulated ultrasonic wave, with a central modulation frequency $f_m$ comprised between 0.5 and 32 kHz, for a duration comprised between $1/f_m$ and $20/f_m$.

21. The device according to any of claims 19 or 20, wherein at least the transducer (2) and the acoustic sensor (6) are integrated into a portable measuring probe (21).

**Patentansprüche**

1. Akustisches Messverfahren zum Bestimmen wenigstens einer physikalischen Eigenschaft eines porösen elastischen Materials (8), wobei dieses Verfahren die folgenden Schritte umfasst:

(a) es wird eine Schallwelle, die durch einen parametrischen Ultraschalleffekt erzeugt wird, zum porösen elastischen Material (8) ausgesandt,
(b) wenigstens erste und zweite Signale ($S_I$, $S_R$; $S_I$, $S_T$), die die Schallwelle repräsentieren, werden mit wenigstens einem akustischen Sensor (6) erfasst,
(c) und es wird ausgehend von den ersten und zweiten Signalen die physikalische Eigenschaft bestimmt,

**dadurch gekennzeichnet, dass** im Verlauf des Schritts (a) die Schallwelle erzeugt wird, indem eine amplitudenmodulierte Ultraschallwelle hergestellt wird, mit einer zentralen Modulationsfrequenz $f_m$ zwischen 0,1 und 50 kHz und über eine Zeitdauer, die zwischen $1/f_m$ und $100/f_m$ liegt,
und **dadurch**, dass der Schritt (b) die folgenden Unterschritte umfasst:

(b1) es wird das erste Signal ($S_I$) vor der Wechselwirkung der Schallwelle mit dem porösen elastischen Material (8) mit dem Schallsensors (6) erfasst,
(b2) es wird das zweite Signal ($S_R$;$S_T$) nach der Wechselwirkung der Schallwelle mit dem porösen elastischen Material (8) mit demselben Schallsensor (6), wie dem im Unterschritt (b1) verwendeten, erfasst.

2. Verfahren nach Anspruch 1, bei dem im Verlauf des Schritts (a) die Schallwelle erzeugt wird, indem eine amplitudenmodulierte Ultraschallwelle hergestellt wird, mit einer zentralen Modulationsfrequenz $f_m$ zwischen 0,5 und 32 kHz und über eine Zeitdauer, die zwischen $1/f_m$ und $20/f_m$ liegt.

3. Verfahren nach einem der Ansprüche 1 oder 2, bei dem im Verlauf des Schritts (a) die amplitudenmodulierte Ultraschallwelle erzeugt wird, indem wenigstens ein Wandler (2) verwendet wird, der ein amplitudenmoduliertes elektrisches Signal empfängt.

4. Verfahren nach Anspruch 1, bei dem im Verlauf des Schritts (a) die amplitudenmodulierte Ultraschallwelle erzeugt wird, indem wenigstens zwei Wandler (2) verwendet werden, die jeweils eine von zwei nicht amplitudenmodulierten Ultraschallwellen aussenden, wobei die nicht amplitudenmodulierten Ultraschallwellen jeweils eine zentrale Frequenz haben, die sich um einen Wert unterscheiden, der zwischen 0,1 und 50 kHz liegt.

5. Verfahren nach Anspruch 2, bei dem im Verlauf des Schritts (a) die amplitudenmodulierte Ultraschallwelle erzeugt wird, indem wenigstens zwei Wandler (2) verwendet werden, die jeweils eine von zwei nicht amplitudenmodulierten Ultraschallwellen aussenden, wobei die nicht amplitudenmodulierten Ultraschallwellen jeweils eine zentrale Frequenz haben, die sich um einen Wert unterscheiden, der zwischen 0,5 und 32 kHz liegt.

**6.** Verfahren nach einem der vorhergehenden Ansprüche, bei dem die ausgesandte Schallwelle eine Dauer hat, die zwischen $1/f_m$ und $12/f_m$ liegt.

**7.** Verfahren nach einem der vorhergehenden Ansprüche, bei dem die im Verlauf des Schritts (c) bestimmte physikalische Eigenschaft unter folgenden ausgewählt ist: Reflexionskoeffizient, Porosität, Widerstand, Absorptionskoeffizient, Schallimpedanz, Transmissionskoeffizient, Dämpfungskoeffizient, Phasengeschwindigkeit, Dispersionskurve, viskose-thermische Länge, Tortuosität, charakteristische viskose Länge und charakteristische thermische Länge.

**8.** Verfahren nach einem der vorhergehenden Ansprüche, bei dem das zweite Signal ($S_R$;$S_T$) nach der Rückstreuung der Schallwelle an dem porösen elastischen Material (8) erfasst wird.

**9.** Verfahren nach einem der Ansprüche 1 bis 7, bei dem das zweite Signal ($S_R$;$S_T$) nach dem Durchgang der Schallwelle durch das poröse elastische Material (8) erfasst wird.

**10.** Verfahren nach einem der vorhergehenden Ansprüche, bei dem die physikalische Eigenschaft in einer Umgebung gemessen wird, in der das poröse elastische Material (8) als schalldämmendes Material verwendet wird, wobei die Umgebung aus der folgenden Liste gewählt ist: Gebäude, Kunstwerk, Straßenfahrzeug, Luftfahrzeug, Schienenfahrzeug und Schiff.

**11.** Verfahren nach einem der Ansprüche 1 bis 9, bei dem die physikalische Eigenschaft in einer Linie zur Herstellung des porösen elastischen Materials (8) gemessen wird.

**12.** Verfahren nach einem der vorhergehenden Ansprüche, bei dem in der Bahn der Schallwelle und vor dem zu untersuchenden porösen elastischen Material (8) ein Material (11, 24) zwischengeschaltet wird, das einen akustischen Tiefpassfilter bildet, wobei die ersten und zweiten Signale ($S_I$, $S_R$; $S_I$, $S_T$) alle erfasst werden, nachdem die Schallwelle durch das Material (11, 24), das einen akustischen Filter bildet, hindurch gegangen ist.

**13.** Verfahren nach einem der vorhergehenden Ansprüche, bei dem die erfassten ersten und zweiten Signale mit einem Tiefpassfilter verarbeitet werden.

**14.** Verfahren nach einem der vorhergehenden Ansprüche, bei dem eine Dispersionskurve des porösen elastischen Materials über ein Frequenzband gemessen wird, das im Bereich von 100 Hz - 500 kHz liegt, und, ausgehend von der Dispersionskurve, auf demselben Frequenzband eine Kurve des Absorptionskoeffizienten gemessen wird.

**15.** Verfahren nach einem der vorhergehenden Ansprüche, bei dem die physikalische Eigenschaft des porösen elastischen Materials in Abhängigkeit von einer Position auf diesem Material bestimmt wird.

**16.** Verfahren nach einem der vorhergehenden Ansprüche, bei dem ausgehend von der physikalischen Eigenschaft akustische Verluste im porösen elastischen Material bestimmt werden.

**17.** Verfahren nach einem der vorhergehenden Ansprüche, bei dem die ersten und zweiten Signale in einem Abstand von mehr als 10 m vom porösen elastischen Material erfasst werden.

**18.** Verfahren nach einem der vorhergehenden Ansprüche, bei dem das poröse elastische Material, an dem die Messung ausgeführt wird, in der Herstellung begriffen ist.

**19.** Vorrichtung zur akustischen Messung zum Bestimmen wenigstens einer physikalischen Eigenschaft eines porösen elastischen Materials (8), wobei diese Vorrichtung folgendes umfasst:

- akustische Sendemittel (2, 3), um eine Schallwelle, die durch einen parametrischen Ultraschalleffekt erzeugt wird, zum porösen elastischen Material (8) auszusenden,
- Empfangsmittel (6), um wenigstens erste und zweite Signale zu erfassen, die die Schallwelle repräsentieren,
- und Verarbeitungsmittel (7), um ausgehend von den ersten und zweiten Signalen die physikalische Eigenschaft zu bestimmen,

**dadurch gekennzeichnet, dass** die akustische Sendemittel (2, 3) dafür eingerichtet sind, die Schallwelle zu erzeugen, indem sie eine amplitudenmodulierte Ultraschallwelle herstellen, mit einer zentralen Modulationsfrequenz $f_m$ zwischen 0,1 und 50 kHz und über eine Zeitdauer, die zwischen $1/f_m$ und $100/f_m$ liegt,

und **dadurch**, dass die Empfangsmittel (6) einen einzigen Schallsensor (6) umfassen, der dafür eingerichtet ist, das erste Signal vor der Wechselwirkung der Schallwelle mit dem porösen elastischen Material (8) und danach das zweite Signal nach der Wechselwirkung der Schallwelle mit dem porösen elastischen Material zu erfassen,

und **dadurch**, dass die Verarbeitungsmittel (7) dafür eingerichtet sind, die physikalische Eigenschaft ausgehend von den Signalen zu bestimmen, die von dem Schallsensor (6) erfasst werden.

20. Vorrichtung nach Anspruch 19, bei der die akustischen Sendemittel (2, 3) dafür eingerichtet sind, die Schallwelle zu erzeugen, indem sie eine amplitudenmodulierte Ultraschallwelle herstellen, mit einer zentralen Modulationsfrequenz $f_m$ zwischen 0,5 und 32 kHz und über eine Zeitdauer, die zwischen $1/f_m$ und $20/f_m$ liegt.

21. Vorrichtung nach einem der Ansprüche 19 oder 20, bei der wenigstens der Wandler (2) und der Schallsensor (6) in eine tragbare Messsonde (21) integriert sind.

FIG.1.

FIG.5.

FIG.6.

FIG.2.

FIG.3.

FIG.4.

FIG.8.

FIG.7.

FIG.11.

FIG.9.

FIG.10.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 63218855 A

- US 6186004 A

**Littérature non-brevet citée dans la description**

- **W. SACHSE ; Y. PAO.** On the determination of phase and group velocities of dispersive waves in solids. *J. Appl. Phys.,* 1978, vol. 49, 4320-4327
- **P. LECLAIRE ; L. KELDERS ; W. LAURIKS ; M. MELON ; N.R. BROWN ; B. CASTAGNÈDE.** Determination of the viscous and thermal characteristic lengths of plastic foams by ultrasonic measurements in air and in helium. *J. Appl. Phys.,* 1996, vol. 80, 2009-12
- **D. JOHNSON ; D. KOPLIK ; R. DASHEN.** Theory of dynamic permeability and tortuosity in fluid-saturated porous media. *J. Fluid Mech.,* 1987, vol. 176, 379-402

- **H.A. KRAMERS.** La diffusion de la lumière par les atomes. *Atti del Congresso Internazionale dei Fisici, Como,* 1927
- **R.D.L. KRÖNIG.** On the theory of dispersion of X-rays. *J. Opt. Soc. Amer.,* 1926, vol. 12, 547-557
- **Z.E.A. FELLAH et al.** Verification of the Kramers-Kronig relationship in porous materials having a rigid frame. *J. Sound & Vib.,* 2004, vol. 270, 865-885
- **M. O'DONNEL ; E.T. JAYNES ; J.G. MILLER.** General relationships between ultrasonic attenuation and dispersion. *J. Acous. Soc. Amer.,* 1978, vol. 63, 1935-37